# EUROPÄISCHE PATENTSCHRIFT

(11) **EP 4 396 539 B1**
(45) Veröffentlichungstag und Bekanntmachung des Hinweises auf die Patenterteilung: **11.03.2026**
(21) Anmeldenummer: 21773305.4
(22) Anmeldetag: 01.09.2021
(51) Int. Cl.: G01D 11/24, G01L 3/10

(54) **VERFAHREN ZUR HERSTELLUNG EINES MAGNETISCHEN FLUSSLEITERELEMENTS FÜR EINEN DREHSENSOR**
METHOD FOR PRODUCING A MAGNETIC FLUX CONDUCTOR ELEMENT FOR A ROTATION SENSOR
PROCÉDÉ DE PRODUCTION D'UN ÉLÉMENT CONDUCTEUR DE FLUX MAGNÉTIQUE POUR UN CAPTEUR DE ROTATION

(43) Veröffentlichungstag der Anmeldung: 10.07.2024
(73) Patentinhaber: thyssenkrupp Presta AG, 9492 Eschen (LI); thyssenkrupp AG, 45143 Essen (DE)
(72) Erfinder: DREHER, Simon, 9470 Buchs (CH)
(74) Vertreter: thyssenkrupp Intellectual Property GmbH
(86) Internationale Anmeldenummer: PCT/EP2021/074090
(87) Internationale Veröffentlichungsnummer: WO 2023/030616

(56) Entgegenhaltungen:
- EP-A2- 1 684 058
- DE-A1- 102007 043 502
- DE-A1- 102008 015 274
- DE-U1- 20 305 732

## Beschreibung

### Stand der Technik

Die Erfindung betrifft ein Verfahren zur Herstellung eines magnetischen Flussleiterelements für einen Drehsensor, das als Blechformteil aus einem magnetisch leitfähigen Blech ausgebildet ist.

Bei einem elektro-mechanischen Hilfskraft-Lenksystem eines Kraftfahrzeugs wird in Abhängigkeit von dem Lenkwinkel und dem Lenkmoment, welches der Fahrer auf das Lenkrad ausübt, von einem elektrischen Lenkantrieb zusätzlich ein Hilfsmoment und/ oder ein zusätzlicher Lenkwinkel in die Lenkwelle eingekoppelt. Bei einem Steer-by-Wire-Lenksystem ohne durchgehende mechanische Verbindung zwischen Lenkrad und den gelenkten Rädern erzeugt allein der elektrische Antrieb den Lenkeinschlag der Räder.

Die Ansteuerung des elektrischen Antriebs erfolgt in Abhängigkeit eines vom Fahrer durch Drehung des Lenkrads eingebrachten Lenkbefehls, wobei die dadurch bewirkte Verdrehung der Lenkwelle und zusätzlich oder alternativ das in die Lenkwelle eingebrachte manuelle Lenkmoment mittels eines elektrischen Drehsensors erfasst und in elektrische Steuersignale für den elektrischen Lenkantrieb umgesetzt wird.

Zur Erfassung des Lenkbefehls sind magnetische Drehsensoren bekannt, welche als Drehmomentsensor oder Drehwinkelsensor ausgebildet sein können, oder als kombinierte Drehmoment- und Drehwinkelsensoren. Eine Bauform eines magnetischen Drehmomentsensors, der im Stand der Technik beispielsweise in der DE 10 2008 015 274 A1 beschrieben ist, weist zwei magnetische Statorelemente auf, die an einem ersten Lenkwellenteil einer Lenkwelle angebracht sind, welches über einen Drehstab torsionselastisch vedrehbar mit einem zweiten Lenkwellenteil verbunden ist, welches einen Magneten aufweist, dessen Magnetfeld besagte Statorelemente durchsetzt. Dadurch wird in die Statorelemente ein von der relativen Winkelorientierung abhängiges Magnetfeld eingekoppelt, welches die Bestimmung der relativen Verdrehung der beiden Lenkwellenteile aufgrund eines an dem Torsionsstab anliegenden Lenkmoments ermöglicht, und gegebenenfalls auch die Erfassung eines absoluten Lenkwinkels des Lenkeinschlags.

Der in die Statorteile eingekoppelte magnetische Fluss wird zur Messung über magnetische Flussleiter zu einem elektronischen Sensorelement geleitet, beispielsweise einem Hall-Sensor, einen magnetoresistiven Sensor (GMR-Sensor) oder dergleichen. Ein Flussleiter kann aus einem magnetisch gut leitfähigen Material wie kornorientiertem Eisenblech (Elektroblech) als dreidimensional geformtes Blechformteil ausgebildet sein, welches zur optimalen Übertragung des magnetischen Flusses von den Statorelementen auf das Sensorelement dreidimensional geformt und an die räumlichen Gegebenheiten angepasst ist.

Es ist bekannt, einen Flussleiter als Blechformteil auszubilden, welches aus Blech ausgeschnitten oder -gestanzt wird, und dreidimensional geformt wird, beispielsweise durch Biegen, Pressen oder dergleichen. Durch die beim plastischen Verformen auftretenden mechanischen Belastungen werden die magnetischen Eigenschaften des Blechmaterials lokal verändert, wodurch die magnetische Leitfähigkeit beeinträchtigt werden kann, so dass es erforderlich ist, das fertig geformte Blechformteil magnetisch zu normalisieren. Dieses magnetische Normalisieren kann beispielsweise ein Erwärmen über eine vorgegebene Rekristallisationstemperatur, Beaufschlagung mit einem magnetischen Wechselfeld oder andere externe Einflussnahmen umfassen, welche für eine Homogenisierung des magnetischen Gefüges sorgen.

Im Stand der Technik werden die einzeln bereitgestellten Flussleiterelemente vor der Montage an den Statorelementen magnetisch normalisiert. Aufgrund der komplexen dreidimensionalen Form der Flussleiterelemente ist dabei eine Verarbeitung als Schüttgut nicht möglich, so dass die Handhabung und Fertigung aufwendig ist.

Ein Verfahren der eingangs genannten Art ist aus der DE 10 2007 043502 A1 bekannt. Dieses ist jedoch aufwendig, und die Einhaltung der geforderten Toleranzen bei hohen Stückzahlen ist problematisch.

Angesichts der vorangehend erläuterten Problematik ist es eine Aufgabe der vorliegenden Erfindung, den Aufwand zur Fertigung von Flussleiterelementen zu verringern.

### Darstellung der Erfindung

Diese Aufgabe wird erfindungsgemäß gelöst durch das Verfahren mit den Merkmalen des Anspruchs 1.

Ein erfindungsgemäßes Verfahren zur Herstellung eines magnetischen Flussleiterelements für einen Drehsensor, das als Blechformteil aus einem magnetisch leitfähigen Blech ausgebildet ist,
umfasst die Schritte:
- Bereitstellen eines Blechrohlings aus einem magnetisch leitfähigem Material, der eine Flächenerstreckung von einem Vielfachen der Fläche eines Blechformteils hat,
- Ausstanzen und Prägen einer Mehrzahl von Formteilabschnitten in dem Blechrohling zur Bildung eines zusammenhängenden Halbzeugs, bei dem Verbindungsstege stehen gelassen werden, über welche die Formteilabschnitte mit Halteabschnitten verbunden bleiben,
- Magnetisches Normalisieren des Halbzeugs,
- Durchtrennen der Verbindungsstege zur Erzeugung separierter Blechformteile der Flussleiterelemente aus den Formteilabschnitten.

Das Verfahren geht von einem Rohmaterial in Form von flächenhaft ausgedehntem Blechmaterial, dem Blechrohling, aus, beispielsweise einem kornorientierten Eisenblech oder Elektroblech, welches als gewalztes und vergütetes Blech mit definiert vorgegebenen magnetischen Eigenschaften bereitgestellt werden kann. Die Fläche des Rohlings beträgt ein Vielfaches der Fläche eines Blechformteils, welches ein Flussleiterelement bildet. Dadurch ist es möglich, eine Vielzahl von Blechabschnitten zur Fertigung jeweils eines Flussleiterelements aus einem Blechrohling auszuschneiden. Aus einem flächenhaft ausgedehnten Blechrohling kann dadurch in vorteilhafter Weise eine entsprechend große Anzahl von Blechabschnitten bzw. Blechformteilen gewonnen werden. Unter dem Begriff des Vielfachen der Fläche ist allerdings nicht ein exaktes mathematisches Vielfaches, also ein exaktes Produkt aus der Fläche des Blechformteils mit einer natürlichen Zahl zu verstehen. Es ist unter dem Begriff des Vielfachen der Fläche des Blechformteils eine größere Fläche zu verstehen, aus der mindestens drei Blechformteile erzeugt werden können.

Im nächsten Schritt erfolgt das Ausstanzen und Prägen einer Mehrzahl von Formteilabschnitten in dem Blechrohling zur Bildung eines zusammenhängenden Halbzeugs, bei dem Verbindungsstege stehen gelassen werden, über welche die Formteilabschnitte mit Halteabschnitten verbunden bleiben. Beim Ausstanzen wird der Blechrohling entlang einer Außenkontur eines Formteilabschnitts durchtrennt bzw. geschnitten, welches dem Außenrand des späteren Blechformteils entspricht. Dabei kann das Ausstanzen mechanisch erfolgen, mittels Stanzstempel und Stanzmatrize, oder auch mittels anderer Verfahren wie Laserschneiden oder dergleichen.

Durch das Ausstanzen wird ein ebener Blechabschnitt gebildet, der durch Prägen in eine dreidimensionale Form entsprechend dem Blechformteil des Flussleiterelements gebracht wird. Das Prägen kann durch Pressen zwischen einem Form- oder Prägestempel und einer relativ dazu negativ geformten Matrize erfolgen, wobei der ebene Blechabschnitt in einen räumlich geformten Formteilabschnitt plastisch umgeformt wird.

Das Ausstanzen und Prägen kann mit Vorteil in einem Arbeitsgang erfolgen, beispielsweise mittels kombinierter Stanz-Prägewerkzeuge, welche räumlich konturierte Prägestempel und dem Verlauf des Umfangs des Formteilabschnitts entsprechende Schneidkanten aufweisen. Dies ermöglich eine rationelle Fertigung.

Erfindungsgemäß ist es wesentlich, dass beim Ausstanzen der Formteilabschnitt nicht vollständig von dem Blechrohling getrennt wird, sondern schmale Verbindungsstege stehen gelassen werden, durch welche ein Formteilabschnitt nach wie vor mit einem außerhalb dieses Formteilabschnitts liegenden Blechabschnitt verbunden bleibt, welcher einen Halteabschnitt bildet. Jeweils eine Mehrzahl von Halteabschnitten bleiben erfindungsgemäß derart miteinander und/oder mit den Formteilabschnitten verbunden, so dass das gebildete Halbzeug einstückig zusammenhängend bleibt. Anders ausgedrückt bilden die Verbindungsstege Brücken zwischen der umlaufenden Umfangskontur der Formteilabschnitte und den Schnittkanten der daran angrenzenden Bereiche des verbleibenden Blechrohlings, welche die Halteabschnitte bilden. Auf diese Weise wird ein flächenhaft im Wesentlichen über die ursprüngliche Erstreckung des Blechrohlings durchgehendes, zusammenhängendes Blech-Halbzeug ode kurz Halbzeug erzeugt, bei dem eine Vielzahl von Formteilabschnitten mittels der Verbindungsstege mit den Halteabschnitten verbunden ist. Der daraus resultierende Vorteil ist, dass das gesamte einteilige Halbzeug weiterbearbeitet werden kann, wodurch die Handhabung vereinfacht werden kann.

Es ist vorteilhaft, dass die räumliche Formgebung durch Prägen ebenfalls an den Formteilabschnitten erfolgt, die über die Verbindungstege im einstückigen Verbund mit den Halteabschnitten gehalten sind. Dadurch können die Formteilabschnitte bereits im Wesentlichen die endgültige Form des Blechformteils des Flussleiterelements haben. Mit anderen Worten ist in dem Halbzeug eine Vielzahl von vorgeformten Blechformteilen einteilig gehalten. Dadurch kann die weitere Handhabung und Bearbeitung vereinfacht werden.

Beim Ausstanzen können auch flächenhaft erstreckte Restabschnitte, die an sich funktionslos zwischen den Formteilabschnitten und den Halteabschnitten liegen, vollständig ausgestanzt werden, d.h. aus dem Blechrohling ausgeschnitten und entfernt werden. Dadurch kann der Vorteil realisiert werden, dass durch die herausgetrennten Restabschnitte mehr Freiraum für den Werkzeugeingriff beim Prägen und/oder beim Heraustrennen aus dem Halbzeug geschaffen wird.

Nach der Ausbildung der Formteilabschnitte erfolgt erfindungsgemäß das magnetische Normalisieren des Halbzeugs. Dabei kann die gesamte Vielzahl der in dem einstückigen Halbzeug gehaltenen Formteilabschnitte in einem einzigen Arbeitsgang magnetisch normalisiert werden, wobei die beim Stanzen und Prägen unvermeidlich erzeugten Störungen des magnetischen Gefüges beseitigt werden und über die Formteilabschnitte und die Haltabschnitte durchgehend homogene magnetische Eigenschaften erzeugt werden. Ein Vorteil ist, dass die Handhabung des Halbzeugs gegenüber den vereinzelten Flussleiterelementen im Stand der Technik weniger aufwendig ist und besser in den Fertigungsprozess integriert werden kann. Ein weiterer, wesentlicher Vorteil ist, dass die Halterung der Formteilabschnitte beim Normalisieren allein durch die Verbindungsstege erfolgt, die aus demselben Material wie die Flussleiterelemente bestehen und einen durch ihre Abmessungen exakt definierten Kontakt mit den Formteilabschnitten haben, der nicht durch unvermeidliche Toleranzen beim Auf- oder Umspannen zum Normalisieren beeinträchtigt werden kann. Somit wird eine rationellere Fertigung zur magnetischen Normalisierung ermöglicht, und darüber hinaus können über hohe Stückzahlen gleichbleibende magnetische Eigenschaften innerhalb engerer Toleranzen als im Stand der Technik erzeugt werden.

Es kann vorgesehen sein, dass das magnetische Normalisieren ein thermisches Behandeln umfasst. Dabei wird das Halbzeug bis oberhalb einer Normalisierungstemperatur erwärmt, was auch als Normalglühen bezeichnet wird, zur Erzeugung eines durchgehend gleichmäßigen magnetischen Gefüges. Anschließend erfolgt ein spannungsarmes, definiertes Abkühlen. Die Normalisierungstemperatur und die Zeitdauer der Erwärmung und es Abkühlens kann abhängig von den Materialeigenschaften und den Abmessungen des Blechmaterials vorgegeben werden. Dadurch, dass das Halbzeug thermisch behandelt wird, kann der Fertigungsaufwand reduziert und die Reproduktionsgenauigkeit der Normalisierung erhöht werden.

Zusätzlich oder alternativ können weitere Maßnahmen zur Normalisierung vorgesehen sein, beispielsweise das Halbzeug einem magnetischen Wechselfeld ausgesetzt werden, um eine Restmagnetisierung zu beseitigen. Auch dabei kann der Fertigungsaufwand verringert und die Reproduktion der Normalisierung verbessert werden.

Die magnetische Normalisierung kann sich auf das gesamte Halbzeug beziehen, beispielsweise durch eine durchgehende Erwärmung. Alternativ ist es denkbar, gezielt Teilbereiche zu erwärmen, welche beispielsweise die Formteilabschnitte, und jeweils ganz oder in Teilbereichen die Verbindungsstege und/oder die Halteabschnitte umfassen. Es ist möglich, das Halbzeug als Ganzes zu behandeln, oder auch ein Durchlaufverfahren vorzusehen, bei dem fortlaufend Teilabschnitte normalisiert werden.

Auf das Normalisieren erfolgt im nächsten Schritt das Durchtrennen der Verbindungsstege zur Erzeugung separierter Blechformteile, welche als Flussleiterelemente einsetzbar sind, aus den Formteilabschnitten. Durch das Durchtrennen der Verbindungsstege werden die Formteilabschnitte jeweils aus dem Blech-Halbzeug herausgetrennt und separiert, dass sie als fertiges Blechformteil zur Montage als Flussleiterelement zur Verfügung stehen. Das Durchtrennen kann durch mechanisches Schneiden erfolgen, oder auch durch andere Verfahren wie Laserschneiden oder dergleichen.

Dadurch, dass die Verbindungsstege verglichen mit der Umfangslänge, die gegeben ist durch die Länge der Umfangskontur des Formteilabschnitts, relativ gering gewählt wird, kann eine beim Durchtrennen auftretende Störung des magnetischen Gefüges lokal eng begrenzt werden auf den Bereich der Schnittkante des Verbindungsstegs. Dadurch kann mit geringem Aufwand sichergestellt werden, dass die bei der magnetischen Normalisierung des Halbzeugs erzeugte Homogenisierung des magnetischen Gefüges im Formteilabschnitt nahezu vollständig im Blechformteil erhalten bleibt, so dass die für die Funktion relevante magnetische Leitfähigkeit des Flussleiterelements praktisch nicht beeinträchtigt wird und mit hoher Genauigkeit reproduzierbar ist.

Es ist möglich, dass ein Formteilabschnitt durch einen Verbindungssteg mit einem Halteabschnitt verbunden ist, was zur Bildung eines einstückigen Halbzeugs bereits ausreichend ist. Eine vorteilhafte Weiterbildung ist, dass zwei Verbindungsstege in einander gegenüberliegenden oder abgewandten Umfangsbereichen eines Formteilabschnitts angeordnet sind. Das hat den Vorteil, dass eine stabilere Fixierung des Formteilabschnitts in dem Halbzeug ermöglicht wird. Weiterhin ist es vorteilhaft, dass der Querschnitt eines einzelnen Halteabschnitts kleiner gewählt werden kann, wodurch eine spätere Durchtrennung zur Entnahme des Blechformteils aus dem Halbzeug erleichtert wird. Es ist ebenfalls denkbar, mehr als zwei Verbindungsstege vorzusehen, beispielsweise um einen komplex geformten Formteilabschnitt besser im Halbzeug zu halten.

Falls mehrere Verbindungsstege vorgesehen sind, sind diese bezüglich der räumlichen Formgebung des Blechformteils bevorzugt in der Ebene des Halbzeugs angeordnet, in welcher die Halteabschnitte liegen und welche mit der Erstreckung des ursprünglichen Blechrohlings korrespondiert.

Um die potentielle Störung des magnetischen Gefüges beim Durchtrennen der Verbindungsstege gering zu halten, ist es vorteilhaft, dass die Breite der Verbindungsstege weniger als 5% der Länge einer Umfangskontur eines Formteilabschnitts beträgt. Besonders vorteilhaft ist es, dass die Breite der Verbindungsstege weniger als 1% der Länge einer Umfangskontur eines Formteilabschnitts beträgt. Die Länge der Umfangskontur entspricht der Umfangslänge, in deren Richtung die Breite der Verbindungsstege gemessen wird. Je schmaler die Verbindungsstege sind, desto geringer ist der zum Durchtrennen erforderliche Energieeintrag, und entsprechend kann eine mögliche Beeinträchtigung der magnetischen Eigenschaften gezielt reduziert werden.

Es ist möglich, dass ein Verbindungssteg eine definierte Länge dadurch erhält, dass die Umfangskontur eines Formteilabschnitts mit einem definierten Abstand zum angrenzenden Halteabschnitt angeordnet wird, beispielsweise durch Ausstanzen eines schmalen Restabschnitts zwischen Formteil- und Halteabschnitt. Durch seine definierte Länge kann der Verbindungssteg leichter durchtrennt werden, und die Beeinträchtigung des magnetischen Gefüges kann einfach auf den Bereich des Verbindungsstegs begrenzt werden.

Es ist weiterhin möglich, dass im Bereich eines Verbindungsstegs eine Sollbruchstelle erzeugt wird. Als Sollbruchstelle kann eine gezielte lokale Materialschwächung erzeugt werden, beispielsweise durch eine beim Prägen eingepresste, verringerte Blechdicke in Form einer Einkerbung oder dergleichen. Dadurch kann die zum Durchtrennen der Verbindungsstege erforderliche Beanspruchung im Bereich weiter verringert werden, so dass eine potentielle Störung der magnetischen Eigenschaften noch geringer ist.

Zur Durchführung des Verfahrens kann es vorteilhaft sein, dass der Blechrohling als in Längsrichtung langgestreckter Blechstreifen ausgebildet ist, in den die Formteilabschnitte in Längsrichtung hintereinander eingebracht werden. Ein derartiger Blechstreifen kann als vorkonfektioniertes Bandmaterial bereitgestellt werden, welches ein schmales Blechband mit einer vielfachen Länge eines Blechformteils bildet. Das Blechband hat den Vorteil einer einfachen Handhabung, indem es beispielsweise mit großer Länge als Coil aufgewickelt ist. Für das erfindungsgemäße verfahren kann der Blechrohling als Coil bereitgestellt werden, von dem das Blechband abgewickelt wird und in gleichmäßigen Abständen wie vorangehend beschrieben Formteilabschnitte eingebracht werden, die entsprechend in Längsrichtung aufgereiht sind. Dabei kann die Fertigung beim Durchlauf des Blechbands durch eine Bearbeitungsstation erfolgen, von der das Halbzeug als Halbzeug-Band ausgegeben wird. Dabei ist es denkbar und möglich, dass auch das anschließende magnetische Normalisieren beim Durchlauf durch eine Normalisierungsstation erfolgt, in der beispielsweise jeweils ein Abschnitt des kontinuierlich durchlaufenden Halbzeug-Bands normalgeglüht wird. Das magnetisch normalisierte Halbzeug-Band wird möglich wenig verformt, und die fertigen Flussleiterelemente werden wie beschrieben herausgetrennt.

Die Breite des Blechstreifens bzw. -bands wird bevorzugt so bemessen, dass mindestens ein in Längsrichtung durchgehender Halteabschnitt ausgebildet wird. Dies kann dadurch realisiert sein, dass die Breite das Blechbands größer ist als die Breite eines Formteilabschnitts, quer zur Länge des Blechbands gemessen. Dadurch erstreckt sich der Halteabschnitt entlang der in Längsrichtung aufgereihten Formteilabschnitte. Bevorzugt kann vorgesehen sein, dass beiderseits der aufgereihten Formteilabschnitte jeweils ein durchgehender Halteabschnitt ausgebildet wird. Dadurch kann sichergestellt werden, dass die Formteilabschnitte auf zwei Seiten sicher gehalten werden, bevorzugt über direkt oder mittelbar mit den durchgehenden Halteabschnitten verbundenen Verbindungsstegen. Ein weiterer Vorteil des in Längsrichtung durchgehenden Halteabschnitts ist, dass das Halbzeug-Band eine Art Gurt oder Magazin bildet, welcher die Handhabung der Formteilabschnitte vereinfacht.

Eine Weiterbildung kann vorsehen, dass mindestens zwei Halteabschnitte über mindestens einen seitlich zu einem Formteilabschnitt angeordneten Stützabschnitt miteinander verbunden sind. Die Halteabschnitte können beispielsweise in Längsrichtung durchgehend ausgebildet sein, und die Stützabschnitte können quer dazwischen angeordnet sein, vorzugsweise jeweils zwischen zwei benachbarten Formteilabschnitten. Dadurch umrahmen der Stützabschnitt und Halteabschnitte den Formteilabschnitt zumindest über einen Teilumfang, bevorzugt kann ein Formteilabschnitt von Stütz- und Halteabschnitten über den gesamten Umfang umlaufend eingerahmt sein. Daraus resultiert eine vorteilhaft erhöhte Formsteifigkeit des Halbzeugs, so dass die Verformung des Halbzeugs und damit der Formteilabschnitte beim Handhaben und beim Heraustrennen weiter reduziert werden kann.

Ein Formteilabschnitt kann über Verbindungsstege, bevorzugt über mindestens zwei Verbindungsstege mit den angrenzenden Halte- und/oder Stützabschnitten verbunden sein. Beispielsweise kann jeweils ein Verbindungssteg zwischen einem Formteilabschnitt und einem der beiden längs verlaufenden Halteabschnitten angeordnet sein.

Bei einem Drehsensor für ein Kraftfahrzeuglenksytem, umfassend zwei Statorelemente, die an einem ersten Lenkwellenteil einer Lenkwelle anbringbar sind und magnetisch leitend über mindestens ein Flussleiterelement an einen elektrischen Magnetfeldsensor angekoppelt sind, und einem Magneten, der an einem relativ zum ersten Lenkwellenteil um eine Längsachse verdrehbar angeordneten zweiten Lenkwellenteil anbringbar ist, wobei das Magnetfeld des Magneten die Statorelemente durchsetzt, kann ein Flussleiterelement bevorzugt gemäß einer der vorangehend beschriebenen Ausführungen des erfindungsgemäßen Verfahrens ausgebildet sein.

Ein Flussleiterelement ist als Blechformteil wie vorangehend beschrieben ausgebildet. In der Regel sind mindestens zwei Flussleiterelemente vorgesehen, welche als magnetisch leitende Verbindung jeweils zwischen einem der beiden Statorelemente und dem Magnetfeldsensor angebracht sind.

Die Statorelemente bilden Magnetflussleiter zur winkelaufgelösten Erfassung des Magnetfelds des Magneten und haben bevorzugt jeweils einen koaxial auf dem einen Lenkwellenteil angebrachten ringfömigen Grundkörper. Die beiden Grundkörper sind über mindestens ein erfindungsgemäßes Flussleiterelement magnetisch an den elektrischen Magnetfeldsensor angekoppelt, beispielsweise einen Hall-, GMR- oder sonstigen Sensor. Dadurch, dass die magnetischen Eigenschaften des erfindungsgemäßen Flussleiterelements innerhalb enger Toleranzen realisiert und mit geringem Fertigungsaufwand bereitgestellt werden können, ergeben sich entsprechend funktionale und fertigungstechnische Vorteile für den Drehsensor.

Dadurch, dass die Lenkwellenteile über einen Drehstab torsionselastisch miteinander verbunden sind, kann in an sich bekannter Weise ein Drehmomentsensor zur Verfügung gestellt werden. Erfindungsgemäß hergestellte Flussleiterelemente können gleichfalls in Drehwinkelsensoren eingesetzt werden.

Ein Lenksystem für ein Kraftfahrzeug, umfassend zwei über einen Drehstab um eine Längsachse verdrehbar miteinander verbundene Lenkwellenteile, zwischen denen ein Drehsensor angeordnet ist, weist mindestens einen Drehsensor mit einem Flussleiterelement der vorangehend beschriebenen Art auf.

### Beschreibung der Zeichnungen

Vorteilhafte Ausführungsformen der Erfindung werden im Folgenden anhand der Zeichnungen näher erläutert. Im Einzelnen zeigen:
- Figur 1: ein Kraftfahrzeuglenksystem in einer schematischen perspektivischen Ansicht,
- Figur 2: eine vergrößerte Detailansicht des Drehsensors des Lenksystems gemäß Figur 1 in einer freigestellten schematischen Ansicht,
- Figur 3: einen ersten Teilschritt des erfindungsgemäßen Verfahrens in einer schematischen Darstellung,
- Figur 4: einen auf Figur 3 folgenden Teilschritt,
- Figur 5: einen auf Figur 4 folgenden Teilschritt,
- Figur 6: ein gemäß den in Figuren 3 bis 5 gezeigten Verfahrensschritten hergestelltes Halbzeug-Band,
- Figur 7: das in Figur 6 gezeigte Halbzeug in einem auf Figur 5 folgenden Teilschritt während der magnetischen Normalisierung,
- Figur 8: ein gemäß Figur 7 magnetisch normalisiertes Halbzeug in einem folgenden Teilschritt beim Durchtrennen der Verbindungsstege,
- Figur 9: ein fertiges Flussleiterelement eines aus dem Halbzeug gemäß Figur 8 herausgetrennten Blechformteils in einer ersten Ausführungsform,
- Figur 10: eine zweite Ausführungsform eines magnetisch normalisierten Halbzeugs in dem Teilschritt beim Durchtrennen der Verbindungsstege,
- Figur 11,12: ein fertiges Flussleiterelement eines aus dem Halbzeug gemäß Figur 10 herausgetrennten Blechformteils in einer zweiten Ausführungsform in unterschiedlichen perspektivischen Ansichten.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

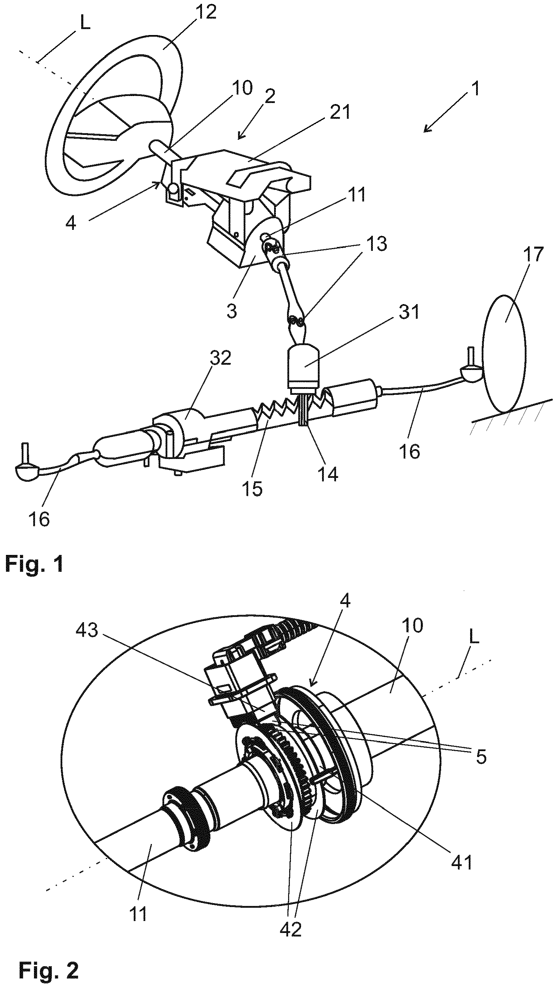

In Figur 1 ist ein als elektromechanische Hilfskraftlenkung ausgebildetes Kraftfahrzeuglenksystem 1 schematisch dargestellt. Diese weist eine Lenksäule 2 mit einer Trageinheit 21 auf, die an einer nicht dargestellten Karosserie eines Kraftfahrzeugs anbringbar ist.

In der Lenksäule 2 ist eine Lenkwelle umfassen ein erstes, oberes Lenkwellenteil 10 um ihre Längsachse L drehbar gelagert. An dem bezüglich der Fahrtrichtung hinteren Ende ist an dem Lenkwellenteil 10 ein Lenkrad 12 drehfest, über welches ein Fahrer ein Lenkmoment (Handmoment) als Lenkbefehl in die Lenkwelle einbringen kann.

Das obere Lenkwellenteil 10 ist über einen hier nicht dargestellten torsionselastischen Drehstab mit einem zweiten, unteren Lenkwellenteil 11 verbunden.

Das Lenkmoment wird über die Lenkwellenteile 10 und 11 über zwischengeschaltete Kreuzgelenke 13 auf ein Lenkritzel 14 übertragen, welches in eine längsverschieblich gelagerte Zahnstange 15 eingreift. Diese setzt eine Drehung der Lenkwelle 10 bei einem Lenkeingriff in eine Verschiebung von Spurstangen 16 um, wie mit dem Doppelpfeil angedeutet, welche den vorgegebenen Lenkeingriff als Lenkeinschlag auf die lenkbaren Räder 17 des Kraftfahrzeugs übertragen.

Eine elektrische Hilfskraftunterstützung kann einen an der Lenksäule 2 angebrachten, mit der Lenkwelle 10 gekoppelten Hilfskraftantrieb 3, oder einen am Ritzel 14 mit der Lenkwelle 10 gekoppelten Hilfskraftantrieb 31 aufweisen, wobei die Hilfskraftantriebe 3 und 31 gleichartig aufgebaut sein können. Durch den Hilfskraftantrieb 3 oder 31 kann ein Hilfsdrehmoment in die untere Lenkwelle 11 und/oder das Lenkritzel 14 eingekoppelt werden, um den Fahrer bei der Lenkarbeit zu unterstützten.

Es kann auch ein Hilfskraftantrieb 32 vorgesehen sein, um eine die Lenkung unterstützende Hilfskraft in die Zahnstange 15 einzubringen.

Üblicherweise ist nur an einer der gezeigten drei Positionen ein Hilfskraftantrieb 3, 31 oder 32 angebracht. Das Hilfsdrehmoment bzw. die Hilfskraft, welche zur Unterstützung des Fahrers mittels der jeweiligen Hilfskraftantrieb 3, 31 oder 32 aufgebracht werden soll, wird unter Berücksichtigung eines von einem Drehmomentsensor 4 ermittelten, vom Fahrer manuell eingebrachten Lenkmoments bestimmt.

Der Drehmomentsensor 4 ist zwischen dem oberen Lenkwellenteil 10 und dem unteren Lenkwellenteil 11 angebracht, wie in der vergrößerten Darstellung von Figur 2 erkennbar ist, welche eine schematische perspektivische Ansicht der Lenksäule 2 aus Figur 1 vergrößert zeigt.

An dem Lenkwellenteil 10 ist koaxial ein Ringmagnet 41 angebracht, der innerhalb von zwei ringförmigen Statorelementen 42 angeordnet ist, die koaxial an dem zweiten Lenkwellenteil 11 angebracht sind.

Die beiden Statorelemente 42 sind über zwei erfindungsgemäß gefertigte Flussleiterelemente 5 magnetisch an einen elektrischen Magnetfeldsensor 43 angekoppelt, der im Bereich axial zwischen den Statorelementen 42 angeordnet ist. Die Flussleiterelemente 5 sind als Blechformteile ausgebildet, deren Fertigung im Folgenden näher erläutert wird, wobei die Bezeichnungen Flussleiterelement 5 und Blechformteil 5 gleichbedeutend verwendet werden.

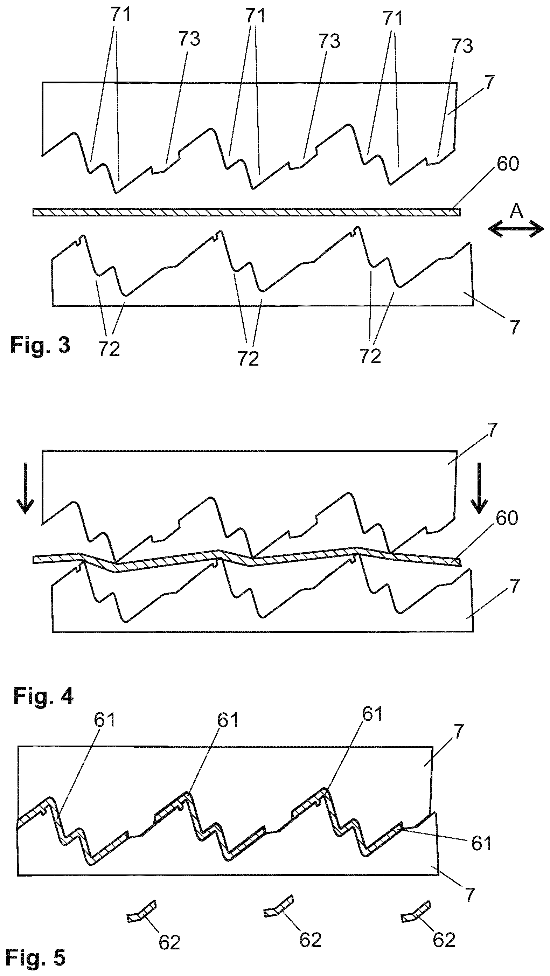

Die Fertigung von Blechformteilen 5, die in dem Drehmomentsensor 4 funktional als Flussleiterelemente 5 eingesetzt werden, ist für eine erste Ausführung in den Figuren 3, 4, 5, 7 und 8 erläutert.

In Figur 3 ist ein Blechrohling, der als in einer Längsrichtung A langgestreckter Blechstreifen 60 ausgebildet ist, auch als Blechband oder Bandmaterial bezeichnet, im Längsschnitt gezeigt.

Der Blechstreifen 60 ist zwischen zwei Werkzeughälften 7 eines kombinierten Press-Stanzwerkzeugs angeordnet, welche dreidimensional geformte Pressstempel 71 und dazu komplementäre Pressgesenke 72 aufweisen, sowie Schneidstempel 73.

Dadurch, dass die beiden Werkzeughälften 7 aufeinander zu bewegt werden, wie in Figur 4 mit den Pfeilen angedeutet, erfolgt eine plastische Verformung des Blechrohlings 60.

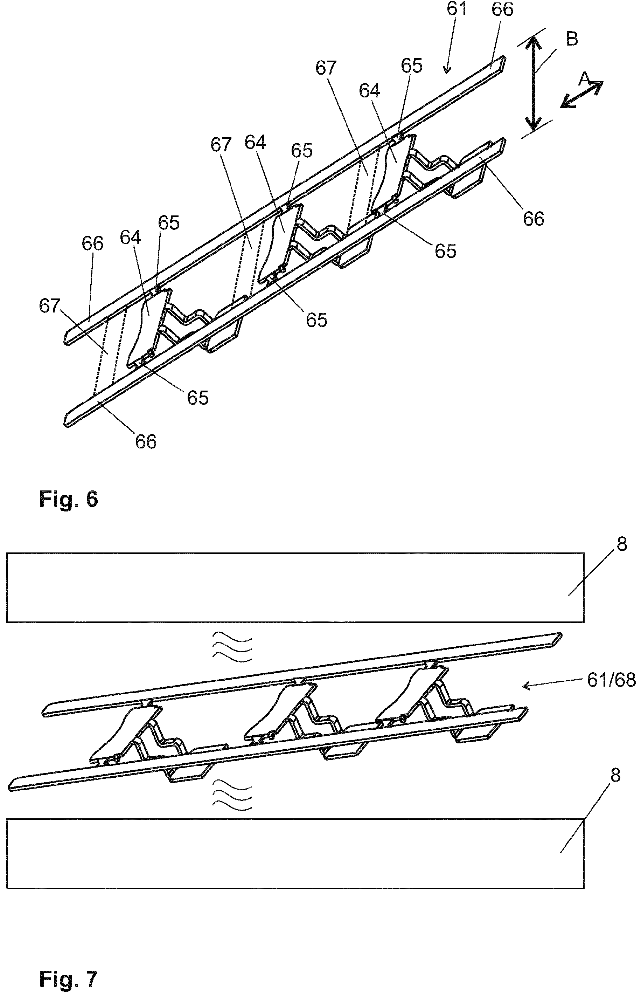

In Figur 5 sind die Werkzeughälften 7 vollständig geschlossen, und durch das Pressen und Stanzen ist der Blechrohling 60 zu einem Blech-Halbzeug 61, oder kurz Halbzeug 61 umgeformt worden, wobei Restabschnitte 62 herausgestanzt worden sind. Das Halbzeug 61 ist in Figur 6 nach der Entnahme aus dem Press-Stanz-Werkzeug perspektivisch gezeigt.

Das in Längsrichtung A langgestreckte Halbzeug 61 hat quer dazu eine Breite B, welche identisch ist mit der Breite des Blechrohlings 60.

Durch das Pressen und Stanzen gemäß Figur 5 sind in dem Halbzeug 61 eine Mehrzahl von Formteilabschnitten 64 ausgeschnitten und plastisch in eine räumliche Form gepresst, welche eine räumliche Verbindung der Statorelemente 42 gemäß Figur 2 zur magnetischen Ankopplung an den Magnetfeldsensor 43 ermöglicht.

Die Formteilabschnitte 64 sind jeweils über einen schmalen Verbindungssteg 65, der bevorzugt eine Breite von kleiner 5%, besonders bevorzugt kleiner 1% der Länge der Umfangskontur eines Formteilabschnitts 64 hat, mit einem von zwei Halteabschnitten 66 verbunden, die sich beiderseits der in Längsrichtung A aufgereihten Formteilabschnitte 64 über die gesamte Länge des Halbzeugs 61 erstrecken.

Optional können die beiden Halteabschnitte 66 über quer durchgehende Stützabschnitte 67 einstückig miteinander verbunden sein, die in Figur 6 gestrichelt eingezeichnet sind. Die Stützabschnitte 67 können ebenfalls beim vorbeschriebenen Pressen und Stanzen ausgebildet werden. Durch die Halteabschnitte 66 und die Stützabschnitte 67 werden die Formteilabschnitte 64 jeweils einzeln im Halbzeug 61 eingerahmt.

Zum magnetischen Normalisieren wird das Blech-Halbzeug 61 in eine Normalisierstation 8 eingebracht wie in Figur 7 schematisch dargestellt ist. Die Normalisierstation 8 umfasst Heizeinrichtungen, durch die das Halbzeug 61 bis über eine spezifische Rekristallisationstemperatur T aufgeheizt wird, bei der eine durchgehende Homogenisierung des magnetischen Gefüges des Halbzeugs 61 erfolgt, welches beispielsweise aus kornorientiertem Eisenblech ausgebildet ist, und das zuvor durch die plastische Umformung gestört worden ist. Die Erwärmung kann durch Strahlung, Konvektion, Kontakt oder anderweitig erfolgen, beispielsweise induktiv oder resistiv. Alternativ oder zusätzlich kann das Halbzeug 61 mit einem magnetischen Wechselfeld beaufschlagt werden.

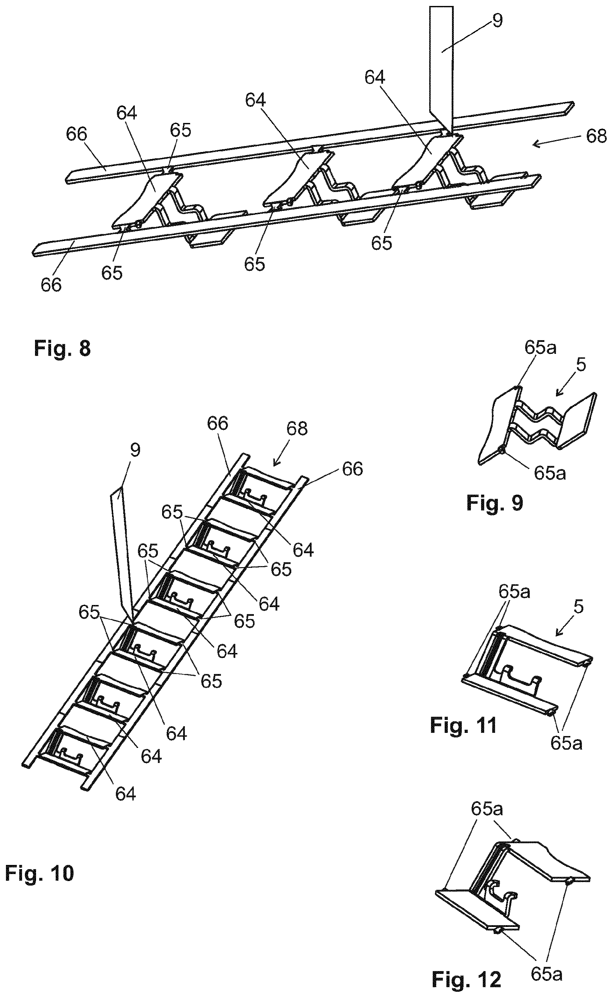

Durch das magnetische Normalisieren wird das Halbzeug 61 in ein normalisiertes Halbzeug 68 umgewandelt, welches in Figur 8 gezeigt ist. Nach dem Aufheizen, welches auch als Normalglühen bezeichnet werden kann, erfolgt ein Abkühlen des normalisierten Halbzeugs 68.

In Figur 9 ist gezeigt, wie mittels eines Trennwerkzeugs 9, welches einen mechanischen Schneidstempel, einen Laserschneider ober dergleichen aufweisen kann, die Verbindungsstege 65 durchtrennt werden, wodurch die Formteilabschnitte 64 aus dem normalisierten Halbzeug 68 herausgetrennt werden, so dass jeweils ein vereinzeltes Blechformteil 5 erzeugt ist, welches als Flussleiterelement 5 wie oben beschrieben eingesetzt werden kann. Dieses weist allenfalls an den Trennstellen 65a, wo die Verbindungsstege 65 durchtrennt worden sind, eine lokal eng begrenzte Veränderung der magnetischen Struktur auf, die jedoch auf die für die Funktion maßgebliche magnetische Leitfähigkeit des Flussleiterelements 5 keinen merklichen Einfluss hat.

In Figur 10 ist analog zu Figur 8 eine zweite Ausführung eines normalisierten Halbzeugs 68 dargestellt, wobei die Formteilabschnitte 64 abweichend geformt sind und jeweils über vier Verbindungsstege 65 mit den beiden Halteabschnitten 66 verbunden sind. Diese werden ebenfalls mittels eines Trennwerkzeugs 9 durchtrennt. Ein dadurch erhaltenes Flussleiterelement 5 ist in unterschiedlichen perspektivischen Ansichten in Figur 11 und 12 gezeigt, wobei wie in Figur 9 die Trennstellen 65a erkennbar sind.

Die Verbindungsstege 65 können Sollbruchstellen mit verminderter Festigkeit haben, beispielsweise Einkerbungen oder dergleichen.

### Bezugszeichenliste

- 1: Lenksystem
- 10: Lenkwellenteil
- 11: Lenkwellenteil
- 12: Lenkrad
- 13: Kreuzgelenk
- 14: Ritzel
- 15: Zahnstange
- 16: Spurstange
- 17: Rad
- 2: Lenksäule
- 21: Trageinheit
- 3,31: Hilfskraftantrieb
- 4: Drehmomentsensor
- 41: Ringmagnet
- 42: Statorelement
- 43: Magnetfeldsensor
- 5: Flussleiterelement / Blechformteil
- 60: Blechstreifen
- 61: Halbzeug (Blech-Halbzeug)
- 62: Restabschnitte
- 64: Formteilabschnitt
- 65: Verbindungssteg
- 65a: Trennstellen
- 66: Halteabschnitt
- 67: Stützabschnitt
- 68: normalisiertes Halbzeug
- 7: Werkzeughälften
- 71: Pressstempel
- 72: Pressgesenk
- 73: Schneidstempel
- 8: Normalisierstation
- 9: Trennwerkzeug
- L: Längsachse
- A: Längsrichtung
- B: Breite

## Patentansprüche

1. Verfahren zur Herstellung eines magnetischen Flussleiterelements (5) für einen Drehsensor (4), das als Blechformteil (5) aus einem magnetisch leitfähigen Blech ausgebildet ist,
umfassend die Schritte:
- Bereitstellen eines Blechrohlings (60) aus einem magnetisch leitfähigem Material, der eine Flächenerstreckung von einem Vielfachen der Fläche eines Blechformteils (5) hat,
- Ausstanzen und Prägen einer Mehrzahl von Formteilabschnitten (64) in dem Blechrohling zur Bildung eines zusammenhängenden Halbzeugs (61), bei dem Verbindungsstege (65) stehen gelassen werden, über welche die Formteilabschnitte (64) mit Halteabschnitten (66) verbunden bleiben,
- Magnetisches Normalisieren des Halbzeugs (61),
- Durchtrennen der Verbindungsstege (65) zur Erzeugung separierter Blechformteile (5) aus den Formteilabschnitten (42).

2. Verfahren nach Anspruch 1, **dadurch gekennzeichnet, dass** das magnetische Normalisieren ein thermisches Behandeln umfasst.

3. Verfahren nach einem der vorangehenden Ansprüche, **dadurch gekennzeichnet, dass** die Breite der Verbindungsstege (65) weniger als 5% der Länge einer Umfangskontur eines Formteilabschnitts (64) beträgt.

4. Verfahren nach einem der vorangehenden Ansprüche, **dadurch gekennzeichnet, dass** die Breite der Verbindungsstege (65) weniger als 1% der Länge einer Umfangskontur eines Formteilabschnitts (64) beträgt.

5. Verfahren nach einem der vorangehenden Ansprüche, **dadurch gekennzeichnet, dass** im Bereich eines Verbindungsstegs (65) eine Sollbruchstelle erzeugt wird.

6. Verfahren nach einem der vorangehenden Ansprüche, **dadurch gekennzeichnet, dass** der Blechrohling als in Längsrichtung langgestreckter Blechstreifen (60) ausgebildet ist, in den die Formteilabschnitte (64) in Längsrichtung (A) hintereinander eingebracht werden.

7. Verfahren nach Anspruch 6, **dadurch gekennzeichnet, dass** mindestens ein in Längsrichtung (A) durchgehender Halteabschnitt (66) ausgebildet wird.

8. Verfahren nach Anspruch 6 oder 7, **dadurch gekennzeichnet, dass** mindestens zwei Halteabschnitte (66) über mindestens einen parallel zu einem Formteilabschnitt (64) angeordneten Stützabschnitt (67) miteinander verbunden sind.

## Claims

1. A method of manufacturing a magnetic flux conductor element (5) for a rotary sensor (4), which is formed as a sheet metal molded part (5) from a magnetically conductive sheet metal,
comprising the steps of:
- Providing a sheet metal blank (60) made of a magnetically conductive material, which has a surface extension of a multiple of the surface area of a sheet metal molded part (5),
- punching out and embossing a plurality of shaped part sections (64) in the sheet metal blank to form a coherent semi-finished product (61), in which connecting webs (65) are left, via which the shaped part sections (64) remain connected to holding sections (66),
- Magnetic normalization of the semi-finished product (61),
- cutting through the connecting webs (65) to produce separated sheet metal shaped parts (5) from the shaped part sections (42).

2. Method according to claim 1, **characterized in that** the magnetic normalization comprises a thermal treatment.

3. Method according to one of the preceding claims, **characterized in that** the width of the connecting webs (65) is less than 5% of the length of a circumferential contour of a shaped part section (64).

4. Method according to one of the preceding claims, **characterized in that** the width of the connecting webs (65) is less than 1% of the length of a circumferential contour of a shaped part section (64).

5. Method according to one of the preceding claims, **characterized in that** a predetermined breaking point is produced in the region of a connecting web (65).

6. Method according to one of the preceding claims, **characterized in that** the sheet metal blank is formed as a sheet metal strip (60) elongated in the longitudinal direction, into which the shaped part sections (64) are introduced one behind the other in the longitudinal direction (A).

7. Method according to claim 6, **characterized in that** at least one holding section (66) is formed which is continuous in the longitudinal direction (A).

8. Method according to claim 6 or 7, **characterized in that** at least two holding sections (66) are connected to one another via at least one supporting section (67) arranged parallel to a moulded part section (64).

## Revendications

1. Procédé de fabrication d'un élément conducteur de flux magnétique (5) pour un capteur de rotation (4), qui est réalisé sous forme de pièce moulée en tôle (5) à partir d'une tôle magnétiquement conductrice,
comprenant les étapes suivantes :
- Préparation d'une ébauche de tôle (60) en un matériau magnétiquement conducteur, qui a une extension de surface d'un multiple de la surface d'une pièce moulée en tôle (5),
- Découpage et estampage d'une pluralité de sections de pièce de forme (64) dans l'ébauche de tôle pour former un produit semi-fini (61) cohérent, dans lequel sont laissées des nervures de liaison (65) par lesquelles les sections de pièce de forme (64) restent reliées à des sections de maintien (66),
- Normalisation magnétique du demi-produit (61),
- sectionnement des entretoises de liaison (65) pour produire des pièces moulées en tôle (5) séparées à partir des sections de pièces formées (42).

2. Procédé selon la revendication 1, **caractérisé en ce que** la normalisation magnétique comprend un traitement thermique.

3. Procédé selon l'une quelconque des revendications précédentes, **caractérisé en ce que** la largeur des entretoises de liaison (65) est inférieure à 5% de la longueur d'un contour périphérique d'une portion de pièce formée (64).

4. Procédé selon l'une quelconque des revendications précédentes, **caractérisé en ce que** la largeur des barrettes de liaison (65) est inférieure à 1% de la longueur d'un contour périphérique d'une portion de pièce formée (64).

5. Procédé selon l'une des revendications précédentes, **caractérisé en ce qu'**un point destiné à la rupture est créé dans la zone d'une barre de liaison (65).

6. Procédé selon l'une quelconque des revendications précédentes, **caractérisé en ce que** l'ébauche de tôle est réalisée sous la forme d'une bande de tôle (60) allongée dans la direction longitudinale, dans laquelle les tronçons de pièce formée (64) sont introduits les uns derrière les autres dans la direction longitudinale (A).

7. Procédé selon la revendication 6, **caractérisé en ce qu'**au moins une section de maintien (66) continue dans la direction longitudinale (A) est formée.

8. Procédé selon la revendication 6 ou 7, **caractérisé en ce qu'**au moins deux sections de maintien (66) sont reliées entre elles par au moins une section d'appui (67) disposée parallèlement à une section de pièce formée (64).
